# EUROPEAN PATENT SPECIFICATION

(11) **EP 0 947 481 B1**
(45) Date of publication and mention of the grant of the patent: **25.08.2004**
(21) Application number: 97902707.5
(22) Date of filing: 17.02.1997
(51) Int. Cl.: C04B 26/06, C04B 20/10

(54) **NOCTILUCENT OR FLUORESCENT ARTIFICIAL STONE**
NACHTLUMINESZIERENDES ODER FLUORESZIERENDES KUNSTSTEIN
PIERRE ARTIFICIELLE NOCTILUCENTE OU FLUORESCENTE

(43) Date of publication of application: 06.10.1999
(73) Proprietor: Doppel Co. Ltd., Tokyo 102-0085 (JP)
(72) Inventor: SAKAI, Mieko, Chiyoda-ku Tokyo 102 (JP)
(74) Representative: Calamita, Roberto
(86) International application number: PCT/JP1997/000417
(87) International publication number: WO 1998/035919

(56) References cited:
- JP-A- 6 092 706
- JP-A- 6 228 321
- JP-A- 8 119 706

## Description

### TECHNICAL FIELD

The invention of this application is one relating to noctilucent or fluorescent artificial stone. More particularly, the invention of this application is one relating to artificial stone having noctilucent properties such as light storing properties or light emitting properties accompanied by ultraviolet rays absorption useful for building material, scene material, etc. as guide of direction indication or position by light at night decorating properties, dark field environment.

### BACKGROUND ART

Hitherto, artificial stone is known, crushing natural stone, mixing this with resin etc. grinding hardening. And, regarding this artificial stone, devices have been carried out variously to make it one having natural stone taste of marble, granite, etc., and furthermore superior in hardness, strength, too.

As one attempt of function, performance improvement of artificial stone like this, adding optical function using noctilucent substance of light storing material, fluorite substance shining with the stored light etc. or fluorescent substance of ultraviolet rays light emitting material etc. emitting light accompanying ultraviolet rays absorption has been proposed. This attempt, mixing solidifying resin component as binder of artificial stone with fluorescent substance, or mixing solidifying unsaturated polyester, methacrylic resin, glass, etc. with light storing fluorescent substance or ultraviolet rays fluorescent substance of strontium aluminate, etc., is performed as constituting artificial stone using crushed one of this as aggregate.

However, in the case of conventional noctilucent, fluorite shining or fluorescent artificial stone, the one that light storing material etc. functions even by any method mentioned above is only at the arranged part of binder resin component or aggregate exposed to the surface part of artificial stone, there was disadvantage that light storing material etc. contained inside the forming body of artificial stone does not function at all. Fluorescent material of light storing material etc. is very expensive, since even addition . of small quantity raises the total cost of artificial stone product to about 3∼10 times, conventional artificial stone containing inside fluorescent substance not working like this is not practical costwise, there is the disadvantage that since its light emission also remains in the surface layer part of artificial stone, the thickness of light emission cannot be obtained, there was a problem that its application is extremely limited by high cost and restriction of light emission performance like this.

On the other hand, if addition amount is suppressed for cost reduction, it follows that a trouble occurs that the function effect of light emission or light storing is rarely obtained.

Therefore, in order to improve the light function of artificial stone, the realization of new artificial stone superior in its function effect, being capable of obtaining sufficiently the thickness of light emission of artificial stone, not merely surface, by the use of less noctilucent or fluorescent substance of light storing material etc. for cost reduction, has been hoped for.

### DISCLOSURE OF INVENTION

Accordingly, the invention of this application, as the one to solve the above-mentioned problem, provides artificial stone containing inorganic aggregate and resin, noctilucent or fluorescent artificial stone comprising, as at least part of inorganic aggregate, incorporating, in a ratio of 5∼65 wt% of the composition total amount, transparent inorganic aggregate, baked or normal temperature coated on surface with noctilucent substance of light storing material, fluorite substance with the stored light or fluorescent substance having light emitting properties accompanied by ultraviolet rays absorption.

### BRIEF DESCRIPTION OF DRAWINGS

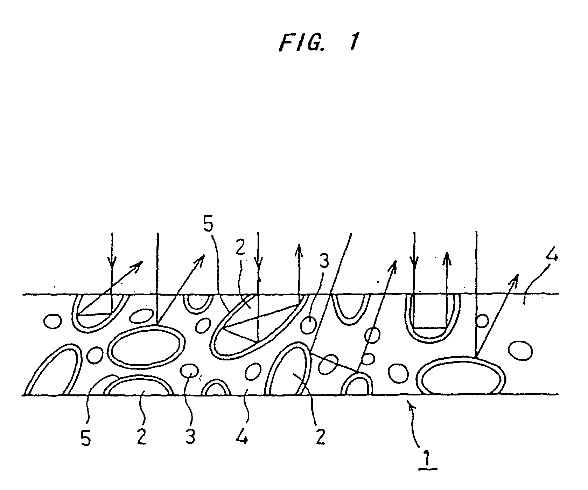

Fig. 1 of the attached drawing is a sectional view which illustrated the construction of the artificial stone of this invention.

### BEST MODE FOR CARRYING OUT THE INVENTION

Regarding the invention of this application, we describe in more detail below.

As the composition of artificial stone, in this invention, as the basic component, it contains inorganic aggregate and resin. And, that at least part of incorporated inorganic aggregate is transparent inorganic aggregate having surface coating layer consisting of noctilucent or fluorescent substance, its ratio is 5∼65 wt% of the total amount of artificial stone composition, is a feature.

In the case of this ratio less than 5 wt%, sufficient light emitting properties, particularly, good light emission thickness is not obtained. And, in the case of exceeding 65 wt%, it is not economical in relation to light emitting properties.

Regarding inorganic aggregate itself, it may not be only the transparent one, but in general, of inorganic aggregate incorporated, more than 5 wt%, preferably 10∼90 wt%, further 20∼80 wt%, should be transparent inorganic aggregate coated with noctilucent, fluorite shining or fluorescent substance.

Incidentally, as division by the size (particle diameter) of inorganic aggregate, the following two kinds are exemplified as the preferred one. That is, one is inorganic small particle component of the size of 5∼70 mesh as the main component, this is adequate inorganic small particle component selected from minerals of silicastone, olivine, feldspar, pyroxene, and mica, etc., natural stone of granite metamorphic rocks, etc., porcelain, glass, metal, etc.

. And, together with this small particle component, fine particle component of 100 mesh under is preferably used. As this fine particle component, natural or artificial fine particle component of various kinds is enumerated. For example, calcium carbonate, aluminum hydroxide, silicastone powder, etc. are fine particle component to be obtained easily.

Also, as part of this fine particle component, it is permissible to add incorporate component of manganese dioxide, titanium dioxide, zirconium silicate, iron oxide etc. for the adjustment of color tone, or component of antimony trioxide, boron compound, bromine compound, etc. to impart flame retardance/nonburning properties.

The above-mentioned small particle component functions as a principal factor to the appearance and physical properties of artificial stone to be obtained. Exposing part particularly, combined with other components, it becomes a principal factor of color and pattern on appearance.

And, regarding this small particle component, in this invention, it is essential to use the one with at least its part being transparent, as the one baked or normal temperature coated with noctilucent substance of light storing properties, fluorite substance shining with the stored light etc. or fluorescent substance having light emitting properties accompanied by ultraviolet rays absorption on its surface. In other words, part or entire amount of small particle component should be transparent inorganic aggregate whose surface is coated with noctilucent substance or fluorescent substance. As small particle component as inorganic aggregate with transparent light like this, glass and silicastone etc. are exemplified as adequate ones.

Regarding small particle component to be incorporated into composition, it is desirable to make the ratio (weight) of its 10∼100% transparent inorganic aggregate having surface coating layer of the above-mentioned noctilucent substance or fluorescent substance.

Also, the fine particle component is one which is considerably smaller than 100 mesh level in comparison with the small particle component, takes position so as to enter between individual particles of small particle component, filling space between particles, contributes to obtaining such properties as hardness and flexibility of artificial stone obtained. It is preferable to make the small particle component and this fine particle component 0.5 : ∼ 5 : 1, further 1 : 1 ∼ 4 : 1 in its weight ratio.

Also, the resin component can select in broad range among from thermosetting ones.

For example, acrylic resin, methacrylic resin, unsaturated polyester resin, etc. are exemplified. Of these, methacrylic resin is exemplified as being adequate from the standpoint of hardness, strength, etc. It is desirable that the formulation ratio of resin component is less than 15 wt%, further not higher than 10 wt% of the composition in all. This resin component has functions to wrap these for small particle component being component to form the above-mentioned skeleton and fine particle component, to contribute to combining the whole, to impart elasticity or tensile strength to the product when artificial stone has been completed.

Therefore, use amount ratio of inorganic aggregate consisting of small particle component and fine particle component is restricted. That is, it should be not lower than 85%, preferably not lower than 90%, in weight ratio. Incidentally, if it exceeds 95%, the product becomes brittle and it is only possible to obtain the one hard to use. Also, if it is less than 85%, the product is so soft that stone-like properties are not obtained, the use range undesirably becomes the same range as resin plates.

This implies that the one other than small particle component and fine particle component of natural stone etc., that is, resin component should not exist in excess of weight ratio 15% at most in the product.

If resin component exceeds 15% or so, the product becomes plastic-like, artificial stone merely becomes nominal appearance any longer. Also, reducing resin component excessively has the side of increasing appearance properties close to natural color of the product but the product becomes the brittle one, becomes unsuitable for use. From this point of view, more preferably, resin component should be 3∼10 wt%.

In the embodiment of this invention, the constitutional ratio of these components is important. What is particularly important is the constitutional ratio with the resin component and other components. In this invention, it is one feature to make possible high density product having compact structure, high density here means that small particle component and fine particle component contained in artificial stone product exist at high density, its degree for example exceeds the range contained in conventional artificial stone, such as higher than density 2.2 g/cm³.

And, in this invention, that at least part of small particle component which is skeleton component is baked or normal temperature coated by noctilucent substance or fluorescent substance as mentioned above is a feature on the embodiment.

In transparent inorganic aggregate, particularly baked coating of small particle component, it is made such that the particle surface of transparent small particle component is coated with several µm ∼ several tens µm, for example, 5∼50 µm, more preferably 20∼40 µm or so is carried out. To be more concrete, it is possible to carry out coating by baking at high temperatures of 120∼1200°C or so.

As noctilucent substance, fluorite substance or fluorescent substance to be baked, it may be selected from the group comprising of noctilucent substances or fluorite substances shining with the stored light and fluorescent substances emitting light by ultraviolet rays irradiation or light absorbing properties such as strontium aluminate, zinc sulfate, etc.

Baking is not conventionally known various methods, it is possible to mix, dry, bake transparent inorganic aggregate, for example, the above-mentioned small particle component in dispersion solution or paste in which one has dispersed, for example, powder granules of light storing material of strontium aluminate etc.

In coating by normal temperature coating, it is coated also by using transparent sticky substance (binder) for the above-mentioned dispersing solution or paste.

Incidentally, in this invention, as mentioned above, it is desirable to make the size of inorganic small particle component a specific one. That is, inorganic small particle component should be the size of 5∼70 mesh as mentioned above. In the case one wants to add color densely up or down, using the one having color and the one having no color, it is conceivable to use changing the size of small particle by the presence or absence of color, the large amount use of the one having an extreme difference should not be used because it deteriorates the strength of product.

On the other hand, the size of particles of fine particle component should be 100 mesh under as mentioned above. It should be one to sufficiently enter between particles of small particle component. To be more concrete, those of 150 ∼ to 250 mesh are preferable.

However, this invention is not restricted to composition to formulate inorganic aggregate divided into small particle component and fine particle component as mentioned above.

Incidentally, what is important in high density artificial stone of this invention, except for special cases, it is desirable that these inorganic aggregate components are uniformly dispersed in any part of the product.

And, it is desirable that the external surface of product is polished or roughened. In practice, it is preferable to make it such that broken small particle component is exposed.

Polishing is practical convenient method to surface expose the dense structure state the high density artificial stone with depth feel of this invention possesses. Of course, it is possible to polish part of the surface of product, exposing small particle component, to use as a pattern the difference between other part of the same surface.

Also, in the case of obtaining artificial stone, it is an important problem to make any one the intended color tone or design properties. Granite or marble becomes one target because it is difficult to obtain product from natural ones and the color luster is beautiful. In this invention, using transparent one as small particle component, it is possible to obtain the one having luster of granite tone or marble tone, etc. Because it is possible to use small particles obtained by crushing quartz-based natural stone as small particle component.

Small particles obtained by crushing quartz-based natural stone is colorless and transparent in many cases. Even in the case of not transparent, there are many which leave some transparency.

. By adding inorganic dye, or organic pigment of azo pigment, phthalocyanine pigment, etc., or various dyes, it is possible to cause to have unique color tone having uniform color, depth, and luster.

Incidentally, in the artificial stone composition of this invention, it is also possible to impart color to the product, mixing and using the particulate colored one of the approximately same size of small particle component as color component.

In any way, it is possible to by far easily secure the reproducibility of color as compared with conventional artificial stone, the one without color change, superior in depth and luster is obtained.

The high density artificial stone of this invention having light storing properties and ultraviolet ray light emitting properties as well as superior color tone in normal may be made arbitrarily rod-like, cylinder-like etc. in its shape.

Molding methods for this are variously selected, for example, cast molding, compression molding, etc. are properly considered.

In compression molding method, to the lower receiving mold as the horizontal mold frame, casting material (mixing material) previously incorporated mixed as much as necessary in the composition after molding completion the small particle component, fine particle component and resin component, mating the upper mold, pressing with a surface pressure of 5∼100 kgf/cm², performing compression molding. And in this molding, at the time of compression, one heats at temperatures of about 90∼140°C for about 5-20 minutes.

And, in this compression molding with heating, it is also possible to add vibration to the mold frame together with pressure, improve the flowability of the above-mentioned mixing material in the mold frame.

The method by compression molding like this exhibits mass production effect as the molding method for comparatively simple shape like plate-like molded article, and is economically superior because there is almost no loss of material.

And, in this invention, it is permissible to perform roughening fabrication to the forming body surface after molding, so that fine particle component is exposed to the surface part.

As the method for this, at first, the selective removing method of resin component is adopted. That is, for example, it is effective to perform surfacing fabrication by jetting high-pressure water to the surface of molded product after demolding from molding die.

This fabrication is not limitative because it differs depending on various conditions of thickness, distance from the nozzle, fabrication mode, etc. Usually, in the case of thickness of 2∼20 cm, it is possible to make it a hydraulic pressure of 50∼1400 kg/cm² from the height of the nozzle of 2∼50 cm or so. This pressure becomes a water pressure condition lower than the case where natural stone is an object.

After all, by the presence of the resin component, the fabrication with high quality becomes possible more easily.

Regarding the nozzle and its system to jet high-pressure water, there are no specific restrictions. Those of various kinds are adopted.

By this surfacing fabrication, flattening or roughening by water jet is realized, and artificial stone having texture with deep feel is produced.

By the presence of the resin component, without the surface becoming whitened, and as compared with the etching method using chemicals, the disposal of waste liquid also becomes easy.

Of course, according to need, it is possible to treat the surface part by organic solvent, soften or melt and partly remove the resin component.

As the organic solvent in this case, it is permissible to select in response to the resin component to use, for example, halogenated hydrocarbon such as methylene chloride, methylene chloride, chloroform, etc., carboxylic acid and its ester compound such as acetic anhydride, ethyl acetate, butyl acetate, etc., or acetone, tetrahydrofuran, DMF, DMSO, etc. are exemplified.

The forming body is immersed in these organic solvents or sprayed or poured with these organic solvents so that the softened or melted resin component is removed from the surface part, thus it is possible to form surface irregularities.

Or also, it is permissible to form irregularities in such a way as to scrape from the surface part the resin component whose hardness is low by wire brush, grinding means, etc.

After roughening and surface fabrication by the above-mentioned various means, by polishing the surface as mentioned above, the coating layer of small particle component of surface is partly broken, this coating layer and particles of small particle component are caused to expose as a cross section on the surface part of the product. By this, surface texture with unique depth and luster is realized. This is attributable to the unique reflection phenomenon of light as mentioned above.

The means for surface polishing is not specifically limited, it is possible to perform using tools such as grind stone, abrasive cloth, abrasive belt, or using abrasive material of buff abrasive material, rubbing compound, etc.

As the abrasive material, diamond, boron carbonate, corundum, alumina, and zirconia which perform mainly grinding action, and tripoly, dolomite, alumina, chromium oxide, cerium oxide, etc. which perform mainly polishing action, are properly used.

Of course, after performing polishing like this, it is permissible to further roughen the surface part and form irregularities. However, in this case, too, as mentioned above, it should be done that particle of at least part of small particle component and the cross section of its coating layer expose.

By doing in this way, too, artificial stone having superior light emitting properties as well as superior skin and texture is manufactured.

Fig. 1 of the attached drawing is a sectional view illustrating artificial stone (1) of this invention. For example, as Fig. 1 showed, artificial stone (1) is constructed of small particle component (2) as transparent inorganic aggregate, fine particle component (3) of smaller particle diameter, and resin component (4) as binder.

To the surface of small particle component (2) light storing or ultraviolet ray light emitting substance is baked coated, the surface of artificial stone (1) is polished.

In this construction, the light irradiated from outside reaches the bake coating substance (5) inside, and in the case of using as resin component (4) methacrylic resin (MMA resin) superior in transparency, it follows that light is incident to all regions of the thickness direction of artificial stone (1).

Therefore, it follows that incident light infiltrates to its inside and light emission from inside results. After all, the absorption layer of light and the light emitting layer become thick. Therefore, light storing in a short time becomes possible and light emitting efficiency becomes large.

Sine the coating is only on the surface of small particle component, it follows that the use amount of noctilucent or fluorescent substance suffices in small amount.

In the following, we will explain examples. Of course, this invention is not limited by the following examples.

### EXAMPLES

### Example 1

Previously, using as 50 wt% of the total small particle component natural silicastone of particle diameter 10∼25 mesh provided in a thickness of about 30 µm with the surface baking layer at about 1000°C using strontium aluminate-based light storing material, small particle component and calcium carbonate of average particle diameter 230 mesh in its weight ratio 2:1, so that it becomes 89 wt% of the composition total weight, uniformly mixed into mortar state together with methyl methacrylate (MMA) of 11 wt% containing hardening agent of about 1.5 wt% of MMA weight.

Casting this composition into a mold frame, formed into a plate-like body of thickness about 15 mm.

Then, polished the surface part using diamond-based grindstone and silicon carbide·magnesia-based grindstone. By this, the small particle component having the baked coating layer, caused to expose the partial cross section of its baked layer and the small particle component.

The resulting artificial stone exhibited noctilucent light storing/light emitting characteristics in all thickness directions, possesses milky white color and luster of marble tone with depth even ordinary, no bubbles were present inside and surface, the composition was uniform.

In test according to the Japanese Industrial Standard JIS K-7112, specific gravity was 2.29. And, water absorption was 0.13%. Other characteristic properties were as in Table 1 below.

**Table 1**

| Item | Results | Test condition |
|---|---|---|
| Flexural strength | 31.30 kgf/cm | according to JIS A5209 |
| Compressive strength | 1400 kgf/cm² | Crosshead speed 0.5 mm/min load cell 2 ton |
| Impact strength | 4.58 kgf·cm/cm² | Pendulum-type impact test |
| Hardness | 1021 kgf/mm² | Vickers hardness according to JIS Z-2244 |
| Coefficient of linear expansion | 0.65 (× 10⁻⁵K) | TMA (30∼100°C) |
| Wear resistance | 0.03 g | JIS A5209 sand dropping type wear resistance test |

And, anomaly was not recognized also by acid resistance, alkali resistance test by 3% hydrochloric acid aqueous solution 8 hours immersion and 3% sodium hydroxide aqueous solution 8 hours immersion.

Using the obtained product as wall board of buildings, it was possible to obtain walls of beautiful granite tone having depth.

### Example 2

Previously, using 40 wt% of the total small particle component transparent glass of particle diameter 5∼50 mesh provided in a thickness of about 40 µm with the surface baking layer at about 700°C using strontium aluminate-based light storing material, small particle component and natural silicastone powder of average particle diameter 250 mesh in its weight ratio 2:1, so that it becomes 87 wt% of the composition total weight, uniformly mixed into mortar state together with methyl methacrylate (MMA) of 13 wt% (the one containing peroxide-based hardening agent of 2.0 wt% of weight), performed pressure heating molding, made into a plate-like body of thickness 12 mm.

Then, polished the surface part using diamond grindstone and silicon carbide magnesia-based grindstone, further removed only the resin part of the surface part at a water jet pressure of 1100 kg/cm² (nozzle diameter 0.75 mm, jet distance 40 mm).

The obtained artificial stone has, normally, depth and non-slip function, at night it was visible for a long time in all thickness directions by the light storing properties.

It was possible to use artificial stone effective as noctilucent guide post building material at the time of emergency electric failure.

### INDUSTRIAL APPLICABILITY

As mentioned above, in this invention, high density artificial stone superior in light characteristics of noctilucent properties etc. and having depth and luster, and good characteristic properties is provided. Moreover, the production of such superior product is realized at by far low cost compared with conventional products.

## Claims

1. Noctilucent, fluorite or fluorescent artificial stone comprising inorganic aggregate and resin **characterized in that** as at least part of the inorganic aggregate is transparent inorganic aggregate baked or normal temperature coated with a noctilucent, fluorite or fluorescent substance having light storing properties or ultraviolet light emitting properties on the surface, formulated in a ratio of 5-65 wt% of the total amount of artificial stone.

2. Noctilucent, fluorite or fluorescent artificial stone of Claim 1, wherein the transparent inorganic aggregate is glass or silicastone.

3. Noctilucent, fluorite or fluorescent artificial stone of Claim 1 or Claim 2, wherein 20-80 wt% of the inorganic aggregate formulated is transparent inorganic aggregate baked or normal temperature coated with a noctilucent or fluorescent substance on the surface.

4. Noctilucent, fluorite or fluorescent artificial stone of any one of Claims 1 to 3, wherein the resin is methacrylic resin.

5. Noctilucent, fluorite or fluorescent artificial stone of any one of Claims 1 to 4, wherein the inorganic aggregate formulated consists of small particle component of size of 5-70 mesh and fine particle component of size of 100 mesh under, at least part of small particle component is transparent inorganic aggregate baked or normal temperature coated with a noctilucent or fluorescent substance on the surface.

6. Noctilucent, fluorite or fluorescent artificial stone of Claim 5, wherein 10-100% (weight) of the composition component is transparent inorganic material baked or normal temperature coated with a noctilucent, fluorite or fluorescent substance on the surface.

7. Noctilucent, fluorite or fluorescent artificial stone of Claim 5, wherein the weight ratio of small particle component and fine particle component is 1:1-4:1.

8. Noctilucent, fluorite or fluorescent artificial stone of any one of Claims 1 to 7, wherein the thickness of the coating layer of the noctilucent or fluorescent substance is 5-50µm.

9. Noctilucent, fluorite or fluorescent artificial stone of any one of Claims 1 to 8, wherein the ratio of the resin is less than 15 wt%.

10. Noctilucent, fluorite or fluorescent artificial stone of Claim 9, wherein the ratio of the resin is less than 10 wt%.

## Patentansprüche

1. Nachtleuchtender, Fluorit- oder fluoreszierender Kunststein, umfassend anorganisches Aggregat und Harz, **dadurch gekennzeichnet, daß** wenigstens ein Teil des anorganischen Aggregats ein transparentes anorganisches Aggregat ist, gebrannt oder bei normaler Temperatur beschichtet mit einer nachtleuchtenden, Fluorit- oder fluoreszierenden Substanz mit Lichtspeicherungseigenschaften oder Ultraviolettlichtemissionseigenschaften auf der Oberfläche, formuliert in einem Anteil von 5-65 Gew.-% der Gesamtmenge des Kunststeins.

2. Nachtleuchtender, Fluorit- oder fluoreszierender Kunststein nach Anspruch 1, wobei das transparente anorganische Aggregat Glas oder Quarzstein ist.

3. Nachtleuchtender, Fluorit- oder fluoreszierender Kunststein nach Anspruch 1 oder Anspruch 2, wobei 20-80 Gew.-% des formulierten anorganischen Aggregats ein transparentes anorganisches Aggregat ist, gebrannt oder bei normaler Temperatur beschichtet mit einer nachtleuchtenden oder fluoreszierenden Substanz auf der Oberfläche.

4. Nachtleuchtender, Fluorit- oder fluoreszierender Kunststein nach irgendeinem der Ansprüche 1 bis 3, wobei das Harz Methacrylharz ist.

5. Nachtleuchtender, Fluorit- oder fluoreszierender Kunststein nach irgendeinem der Ansprüche 1 bis 4, wobei das formulierte anorganische Aggregat aus einer kleinteiligen Komponente mit einer Größe von 5-70 Mesh und einer feinteiligen Komponente mit einer Größe von weniger als 100 Mesh besteht, wobei wenigstens ein Teil der kleinteiligen Komponente ein transparentes anorganisches Aggregat ist, gebrannt oder bei normaler Temperatur beschichtet mit einem nachtleuchtenden oder fluoreszierenden Substanz auf der Oberfläche.

6. Nachtleuchtender, Fluorit- oder fluoreszierender Kunststein nach Anspruch 5, wobei 10-100% (Gewicht) der Zusammensetzungskomponente ein transparentes anorganisches Material ist, gebrannt oder bei normaler Temperatur beschichtet mit einer nachtleuchtenden, Fluorit- oder fluoreszierenden Substanz auf der Oberfläche.

7. Nachtleuchtender, Fluorit- oder fluoreszierender Kunststein nach Anspruch 5, wobei das Gewichtsverhältnis der kleinteiligen Komponente und der feinteiligen Komponente 1:1-4:1 beträgt.

8. Nachtleuchtender, Fluorit- oder fluoreszierender Kunststein nach irgendeinem der Ansprüche 1 bis 7, wobei die Dicke der Beschichtung aus der nachtleuchtenden oder fluoreszierenden Substanz 5-50 µm beträgt.

9. Nachtleuchtender, Fluorit- oder fluoreszierender Kunststein nach irgendeinem der Ansprüche 1 bis 8, wobei der Anteil des Harzes weniger als 15 Gew.-% beträgt.

10. Nachtleuchtender, Fluorit- oder fluoreszierender Kunststein nach Anspruch 9, wobei der Anteil des Harzes weniger als 10 Gew.-% beträgt.

## Revendications

1. Pierre artificielle noctilumineuse, fluorescente ou de type fluorite, comprenant un agrégat inorganique et de la résine, **caractérisée en ce qu'**au moins une partie de l'agrégat inorganique est un agrégat inorganique transparent cuit ou enrobé à température normale avec une substance noctilumineuse, fluorescente ou de type fluorite, ayant des propriétés de stockage de la lumière ou des propriétés d'émission de lumière ultraviolette à la surface, formulée dans un rapport de 5 à 65 % en poids de la quantité totale de pierre artificielle.

2. Pierre artificielle noctilumineuse, fluorescente ou de type fluorite, selon la revendication 1, dans laquelle l'agrégat inorganique transparent est du verre ou de la pierre de silice.

3. Pierre artificielle noctilumineuse, fluorescente ou de type fluorite, selon la revendication 1 ou selon la revendication 2, dans laquelle de 20 à 80 % en poids de l'agrégat inorganique formulé est de l'agrégat inorganique transparent cuit ou enrobé à température normale avec une substance fluorescente ou noctilumineuse à la surface.

4. Pierre artificielle noctilumineuse, fluorescente ou de type fluorite, selon l'une quelconque des revendications 1 à 3, dans laquelle la résine est de la résine méthacrylique.

5. Pierre artificielle noctilumineuse, fluorescente ou de type fluorite, selon l'une quelconque des revendications 1 à 4, dans laquelle l'agrégat inorganique formulé est constitué de composant à petite particule de taille de 5 à 70 mesh et de composant de particule fine de taille de moins de 100 mesh, au moins une partie du composant à petite particule est un agrégat inorganique transparent cuit ou enrobé à température normale avec une substance fluorescente ou noctilumineuse à la surface.

6. Pierre artificielle noctilumineuse, fluorescente ou de type fluorite, selon la revendication 5, dans laquelle de 10 à 100 % (en poids) du composant de la composition est un matériau inorganique transparent cuit ou enrobé à température normale avec une substance fluorescente ou de type fluorite, noctilumineuse à la surface.

7. Pierre artificielle noctilumineuse, fluorescente ou de type fluorite, selon la revendication 5, dans laquelle le rapport massique de composant à petite particule et de composant à particule fine est de 1:1 à 4:1.

8. Pierre artificielle noctilumineuse, fluorescente ou de type fluorite, selon l'une quelconque des revendications 1 à 7, dans laquelle l'épaisseur de la couche d'enrobage de la substance fluorescente ou noctilumineuse est de 5 à 50 µm.

9. Pierre artificielle noctilumineuse, fluorescente ou de type fluorite, selon l'une quelconque des revendications 1 à 8, dans laquelle le rapport de résine est inférieur à 15 % en poids.

10. Pierre artificielle noctilumineuse, fluorescente ou de type fluorite, selon la revendication 9, dans laquelle le rapport de la résine est inférieur à 10 % en poids.
